Europäisches Patentamt

(19) European Patent Office

Office européen des brevets

(11) Veröffentlichungsnummer: **0 042 518**
**B1**

(12) # EUROPÄISCHE PATENTSCHRIFT

(45) Veröffentlichungstag der Patentschrift:
04.04.84

(51) Int. Cl.³: **C 01 B 3/34**

(21) Anmeldenummer: 81104323.1

(22) Anmeldetag: 04.06.81

(54) Verfahren und Vorrichtung zur Erzeugung eines Synthesegases.

(30) Priorität: 20.06.80 DE 3023164

(43) Veröffentlichungstag der Anmeldung:
30.12.81 Patentblatt 81/52

(45) Bekanntmachung des Hinweises auf die Patenterteilung:
04.04.84 Patentblatt 84/14

(84) Benannte Vertragsstaaten:
AT BE DE FR GB IT NL SE

(56) Entgegenhaltungen:
DE - A - 2 346 275
DE - A - 2 911 669

(73) Patentinhaber: Linde Aktiengesellschaft,
Abraham-Lincoln-Strasse 21, D-6200 Wiesbaden (DE)

(72) Erfinder: Watson, Allan, Dr., Meraner Strasse 14a,
D-8012 Ottobrunn (DE)

(74) Vertreter: Schaefer, Gerhard, Dr., Linde
Aktiengesellschaft Zentrale Patentabteilung,
D-8023 Höllriegelskreuth (DE)

BUNDESDRUCKEREI BERLIN

Verfahren und Vorrichtung zur Erzeugung eines Synthesegases

Die Erfindung betrifft ein Verfahren zur Erzeugung eines Synthesegases durch Spaltung von Kohlenwasserstoffen, bei dem die für die Spaltung benötigte Wärme durch Verbrennung eines Heizfluids zusammen mit Verbrennungsluft geliefert wird, sowie eine Vorrichtung zur Durchführung des Verfahrens.

Ein derartiges Verfahren ist in der deutschen Auslegeschrift 2 346 275 beschrieben worden. Ein Einsatzgasgemisch, beispielsweise gasförmiges Benzin, wird einem Spaltgasofen zugeführt und darin unter Zufuhr von Wärme durch Spaltung in ein Synthesegas umgewandelt. Die Wärme, die für den endothermen Spaltprozeß benötigt wird, wird durch Verbrennen von Brennstoffen mit erhitzter Verbrennungsluft, sowie durch Übertragung fühlbarer Wärme aus den Rauchgasen der Verbrennung auf die dabei erhitzte Verbrennungsluft geliefert. Des weiteren wird bei diesem Verfahren mindestens ein Teil der Verbrennungsluft durch Wärmetausch mit den heißen Produktgasen der Kohlenwasserstoffspaltung vorgewärmt.

Mit dem bekannten Verfahren sollte unter anderem der Energieeinsatz möglichst niedrig gehalten werden. Dies wird dadurch erreicht, daß die Vorwärmung der Verbrennungsluft durch Energie geschieht, welche im Verfahren selbst vorhanden ist.

Wenngleich jedoch die im Verfahren vorhandene Energie nutzbringend wieder eingesetzt werden kann, hat sich in der Praxis gezeigt, daß bei dem vorbekannten Verfahren eine weitreichende Vorwärmung der Verbrennungsluft in Wärmetausch mit dem Synthesegas zur Folge hat, daß durch die kleiner werdenden Temperaturdifferenzen zwischen der vorgewärmten Verbrennungsluft und dem Rauchgas der Wärmetauscher im Rauchgasstrom sehr groß wird. Entweder müssen daher erhebliche Kosten für die Bereitstellung großer Wärmetauschflächen aufgewendet werden, oder aber es muß auf eine vollständige Nutzung der Abwärme verzichtet werden. In beiden Fällen arbeitet das Verfahren nicht wirtschaftlich.

Darüber hinaus ist durch die EP-A-0 001 329 ein Verfahren zur Erzeugung eines Synthesegases durch Dampfreformierung von Erdgas bekannt, bei dem der Reformierofen durch Verbrennung eines Gemisches von Erdgas und Luft beheizt wird, wobei das Erdgas in vorgewärmtem Zustand vorliegt. Dieses Verfahren hat jedoch den Nachteil, daß für die Erzeugung der benötigten Prozeßwärme ein Gas mit einem relativ hohen Heizwert benötigt wird.

Der vorliegenden Erfindung liegt daher die Aufgabe zugrunde, ein Verfahren der eingangs genannten Art zu entwickeln, das sich durch geringeren Energieverbrauch auszeichnet.

Diese Aufgabe wird erfindungsgemäß dadurch gelöst, daß das Heizfluid einen Inertanteil von mehr als 35% aufweist und vor seiner Verbrennung in Wärmetausch mit erzeugtem Synthesegas vorgewärmt wird.

Während beim vorbekannten Verfahren gemäß der DE-AS 2 346 275 ein Teil der fühlbaren Wärme des Synthesegases auf Verbrennungsluft übertragen wird, wird im Unterschied hierzu erfindungsgemäß das Heizfluid in Wärmetausch mit dem heißen Synthesegas gebracht. Gemäß einem weiteren Erfindungsmerkmal wird als Heizfluid ein Gas mit einem relativ niedrigen Heizwert eingesetzt.

Mit dem Verfahren gemäß der Erfindung ist es möglich, den Energieeinsatz, d. h. die Menge und den Heizwert des benötigten Heizfluids, zu reduzieren. Mit dem erfindungsgemäßen Verfahren wird das Temperaturniveau des Heizfluids angehoben. Mit dieser Verfahrensführung wird der Wärmeinhalt des Synthesegases optimal ausgenutzt. Darüber hinaus ist es durch die im Heizfluid enthaltene fühlbare Wärme nunmehr möglich, die Menge des benötigten Heizfluids zu refuzieren. Folglich entsteht weniger Rauchgas, so daß die Wärmetauscher im Rauchgasstrom kleiner ausgeführt sein können. Auf diese Weise erhöht sich die Wirtschaftlichkeit des Spaltverfahrens. Die Wirkung der erfindungsgemäßen Vorwärmung des Heizfluids steigt bei steigendem Inertanteil, da die inerten Bestandteile, die bisher als Ballast anzusehen waren, nunmehr fühlbare Wärme übertragen.

Als besonders vorteilhaft hat es sich herausgestellt, wenn in Weiterbildung des erfindungsgemäßen Verfahrens als Heizfluid ein Spülgas aus einer Druckwechseladsorptionsanlage zur Reinigung erzeugten Synthesegases verwendet wird.

Das bei der Spaltung entstehende Synthesegas enthält unerwünschte Bestandteile. Beispielsweise bei der Wasserstofferzeugung fallen vor allem Kohlenmonoxid und Kohlendioxid als unerwünschte Bestandteile an. Das Kohlenmonoxid wird in der Regel durch Konvertierung in Kohlendioxid umgewandelt. Das Kohlendioxid sowie noch vorhandene brennbare Verunreinigungen werden in Druckwechseladsorbern vom Wasserstoff abgetrennt. Die Adsorber werden durch ein Spülgas, beispielsweise durch einen Teil des Produktwasserstoffs, regeneriert. Dieses das Kohlendioxid aus den Druckwechseladsorbern enthaltende Spülgas wird mit Vorteil als Heizfluid eingesetzt. Die Weiterverwendung dieses im Verfahren ohnehin vorhandenen Gasstroms als Heizfluid bringt ebenfalls eine zusätzliche Erhöhung der Wirtschaftlichkeit des erfindungsgemäßen Verfahrens mit sich.

Eine zweckmäßige Vorrichtung zur Durchführung des erfindungsgemäßen Verfahrens umfaßt einen Spaltgasofen, der Zuführungen für ein Heizfluid, Verbrennungsluft und ein Einsatzgas, sowie Abführungen für Rauchgas und Synthesegas aufweist, und ist dadurch gekennzeichnet, daß mindestens ein Wärmetauscher mit Strömungsquerschnitten einerseits für das Heizfluid und andererseits für das Synthesegas vorgesehen ist, wobei der Strömungsquerschnitt für das Heizfluid mit einem Druckwechseladsorber zur Reinigung des Synthesegases verbunden ist.

Die Erfindung und weitere Einzelheiten der Erfindung werden an Hand eines schematisch dargestellten Ausführungsbeispiels näher erläutert. Hierbei zeigt

Fig. 1 ein Verfahrensschema zur Kohlenwasserstoffspaltung,

Fig. 2 ein Detail des erfindungsgemäßen Verfahrens, bei dem ein Druckwechseladsorber-Spülgas als Heizgas verwendet wird.

In einem Steam Reformer 1 wird eine Spaltung von Kohlenwasserstoffen durchgeführt. Dem Steam Reformer 1 wird über eine Zuführungsleitung 5 ein Einsatz bestehend aus Wasserdampf und einem Gas mit einer Zusammensetzung von beispielsweise

| | |
|---|---|
| $H_2$ | 5 Vol.-% |
| $N_2$ | 5 Vol.-% |
| $CO_2$ | 1 Vol.-% |
| $CH_4$ | 83 Vol.-% |
| $C_2H_6$ | 4 Vol.-% |
| $C_3H_8$ | 1 Vol.-% |
| $C_4H_{10}$ | 1 Vol.-% |

zugeführt.

Die im Steam Reformer 1 durchgeführte Spaltung ist ein endothermer Prozeß, d. h. es muß von außen Wärme zugeführt werden. Die benötigte Wärme wird zum Teil durch Verbrennung eines Heizgases mit Verbrennungsluft im Steam Reformer 1 bereitgestellt. Hierfür sind Brenner 2 im Steam Reformer 1 angeordnet, denen ein Gemisch von Heizgas (Leitung 3) und Verbrennungsluft (Leitung 4) zugeführt wird. Das Heizgas hat beispielsweise eine Zusammensetzung von

| | |
|---|---|
| $H_2$ | 37 Vol.-% |
| $N_2$ | 3 Vol.-% |
| $CO$ | 11 Vol.-% |
| $CO_2$ | 35 Vol.-% |
| $CH_4$ | 14 Vol.-% |

Das bei der Verbrennung entstehende Rauchgas wird über ein Gebläse 13 einem Kamin 14 zugeführt. Zuvor wird das Rauchgas durch Kühler 12, sowie durch einen Wärmetauscher 11 abgekühlt. Im Wärmetauscher 11 wird die eintretende Verbrennungsluft angewärmt, beispielsweise auf 250°C. Die im Rauchgas enthaltene Abwärme liefert somit einen weiteren Teil der für die Spaltung erforderlichen Wärme.

Das bei der Spaltreaktion entstehende Synthesegas, das in einer Zusammensetzung von

| | |
|---|---|
| $H_2$ | 79 Vol.-% |
| $N_2$ | 1 Vol.-% |
| $CO$ | 15 Vol.-% |
| $CO_2$ | 8 Vol.-% |
| $CH_4$ | 3 Vol.-% |

und mit einer Temperatur von 850°C vorliegt, verläßt den Steam Reformer über Leitung 6. Es wird in einem Abhitzekessel 7 auf etwa 150°C vorgekühlt, und gibt anschließend in einem Wärmetauscher 8 einen Teil seiner fühlbaren Wärme an Heizgas ab, das bei diesem Wärmetausch auf etwa 120°C vorgewärmt wird.

Die erfindungsgemäße Vorwärmung des Heizgases bewirkt, daß nicht nur die brennbaren Anteile des Heizgases einen Beitrag zur Erwärmung des Steam Reformers 1 liefern, sondern auch die im Heizgas enthaltenen inerten Anteile, wie z. B. $CO_2$, $N_2$. Diese liefern die ihnen im Wärmetauscher 8 übertragene fühlbare Wärme an den Steam Reformer 1. Es wird also im Verfahren ohnehin vorhandene Energie wieder nutzbar gemacht.

Auf diese Weise können auch Heizgase mit relativ hohem Inertgasanteil, beispielsweise 50%, verwendet werden, da die inerten Gasteile nicht mehr nur Ballaststoffe sind, sondern selbst an der Wärmeübertragung beteiligt sind.

Restliche, im Synthesegas noch enthaltene Wärme wird in einem Luftkühler 9 und in einem Wasserkühler 10 abgeführt.

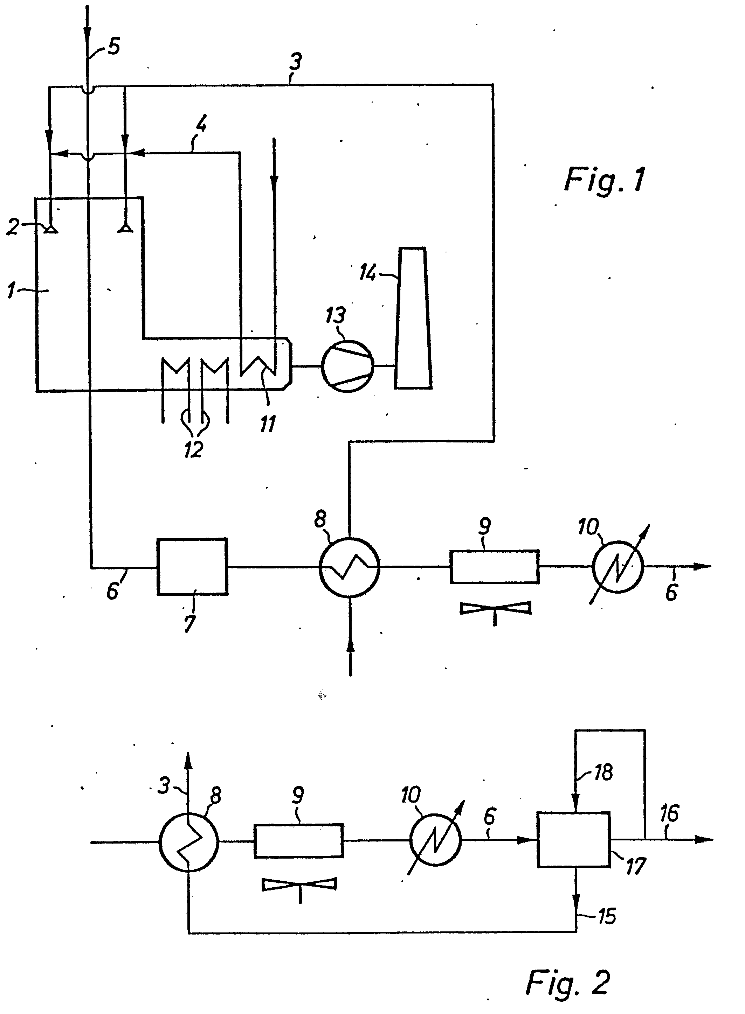

Fig. 2 zeigt ein Detail aus einem Verfahren gemäß Fig. 1, wobei bei dieser Ausführungsform als Heizgas ein Spülgas aus Druckwechseladsorbern 17 verwendet wird.

Im Rohsynthesegas (Leitung 6) enthaltenes Kohlendioxid sowie Kohlenmonoxid, Methan und Stickstoff wird in periodisch umschaltbaren Druckwechseladsorbern 17 abgetrennt. Die Druckwechseladsorber 17 werden mit einem Spülgas (Leitung 18) regeneriert, z. B. mit einem Teil des Produktwasserstoffs.

Nach der Desorption des in den Druckwechseladsorbern 17 enthaltenen Kohlendioxids ist die Zusammensetzung des im wesentlichen auf Umgebungstemperatur befindlichen Spülgases z. B.

| | |
|---|---|
| $H_2$ | 40 Vol.-% |
| $CH_4$ | 8 Vol.-% |
| $N_2$ | 3 Vol.-% |
| $CO$ | 12 Vol.-% |
| $CO_2$ | 37 Vol.-% |

Das aus den Druckwechseladsorbern 17 kommende Spülgas (Leitung 15) wird erfindungsgemäß im Wärmetauscher 8 gegen heißes Roh-Synthesegas angewärmt und anschließend als Heizgas dem Steam Reformer 1 zugeführt (Leitung 3). Das gereinigte Synthesegas verläßt die Anlage über Leitung 16.

Diese Ausführungsform hat den großen Vorteil, daß das Spülgas, das bei der Regenerierung der Druckwechseladsorber 17 ohnehin anfällt, wegen seines hohen Inertgasanteils besonders viel fühlbare Wärme im Wärmetauscher aufnimmt und an den Steam Reformer 1 überträgt.

**Patentansprüche**

1. Verfahren zur Erzeugung eines Synthesegases durch Spaltung von Kohlenwasserstoffen, bei dem die für die Spaltung benötigte Wärme durch Verbrennung eines Heizfluids zusammen mit Verbrennungsluft geliefert wird, dadurch gekennzeichnet, daß das Heizfluid einen Inertanteil von mehr als 35% aufweist und vor seiner Verbrennung in Wärmetausch mit erzeugtem Synthesegas vorgewärmt wird.

2. Verfahren nach Anspruch 1, dadurch gekennzeichnet, daß als Heizfluid ein Spülgas aus einer Druckwechseladsorptionsanlage zur Reinigung erzeugten Synthesegases verwendet wird.

3. Vorrichtung zur Durchführung des Verfahrens nach Anspruch 2 mit einem Spaltofen (1), der Zuführungen für ein Heizfluid (3), Verbrennungsluft (4) und ein Einsatzgas (5), sowie Abführungen für Rauchgas (13, 14) und Synthesegas (6) aufweist, dadurch gekennzeichnet, daß mindestens ein Wärmetauscher (8) mit Strömungsquerschnitten einerseits für das Heizfluid und andererseits für das Synthesegas vorgesehen ist, wobei der Strömungsquerschnitt für das Heizfluid mit einem Druckwechseladsorber (17) zur Reinigung erzeugten Synthesegases verbunden ist.

**Claims**

1. A process for the production of a synthesis gas by cracking hydrocarbons, in which the heat required for the cracking is produced by burning a heating fluid together with combustion air, characterised in that the heating fluid has an inert portion of more than 35% and is, prior to its combustion, preheated in heat exchange with produced synthesis gas.

2. A process according to Claim 1, characterised in that a scavenging gas from a pressure swing adsorption system for purifying synthesis gas produced is used as heating fluid.

3. Apparatus for carrying out the process according to Claim 2, comprising a cracking furnace (1) which has both inlets for a heating fluid (3), combustion air (4) and an inert gas (5), and outlets for flue gas (13, 14) and synthesis gas (6), characterised in that at least one heat exchanger (8) is provided, having flow cross-sections for the heating fluid, on the one hand, and for synthesis gas, on the other hand, the flow cross-section for the heating fluid being connected to a pressure swing adsorber (17) for purifying synthesis gas produced.

**Revendications**

1. Procédé pour produire un gaz de synthèse par craquage d'hydrocarbures, selon lequel la chaleur nécessaire pour le craquage est fournie par la combustion d'un fluide de chauffage conjointement avec un air comburant, caractérisé en ce que le fluide de chauffage possède une teneur en substances inertes supérieure à 35% et est réchauffé, avant sa combustion, par échange thermique avec le gaz de synthèse produit.

2. Procédé selon la revendication 1, caractérisé en ce que l'on utilise comme fluide de chauffage un gaz de balayage provenant d'une installation d'adsorption à variation de pression servant à purifier le gaz de synthèse produit.

3. Dispositif pour la mise en oeuvre du procédé selon la revendication 2, comportant un four de craquage (1) qui présente des admissions pour un fluide de chauffage (3), l'air comburant (4) et un gaz de charge (5), ainsi que des sorties pour le gaz de fumée (13, 14) et le gaz de synthèse (6), caractérisé en ce qu'il est prévu au moins un échangeur de chaleur (8) comportant des sections transversales d'écoulement, d'une part, pour le fluide de chauffage et, d'autre part, pour le gaz de synthèse, la section transversale d'écoulement pour le fluide de chauffage étant reliée à un dispositif d'adsorption à variation de pression (17) servant à épurer le gaz de synthèse produit.

Fig.1

Fig. 2